Europäisches Patentamt

European Patent Office

Office européen des brevets

(19)

(11) EP 0 568 146 B1

# (12) FASCICULE DE BREVET EUROPEEN

(45) Date de publication et mention
de la délivrance du brevet:
**19.11.1997 Bulletin 1997/47**

(51) Int Cl.⁶: **G06F 15/80**

(21) Numéro de dépôt: **93201157.0**

(22) Date de dépôt: **21.04.1993**

(54) **Processeur neuronal muni de moyens pour normaliser des données**

Neuronaler Prozessor mit Datennormalisierungsanlage

Neural processor with data normalising means

(84) Etats contractants désignés:
**DE FR GB**

(30) Priorité: **29.04.1992 FR 9205282**

(43) Date de publication de la demande:
**03.11.1993 Bulletin 1993/44**

(73) Titulaires:
• **LABORATOIRES D'ELECTRONIQUE PHILIPS
S.A.S.
94450 Limeil-Brévannes (FR)**
Etats contractants désignés:
**FR**
• **Philips Electronics N.V.
5621 BA Eindhoven (NL)**
Etats contractants désignés:
**DE GB**

(72) Inventeur: **Deville, Yannick
F-75008 Paris (FR)**

(74) Mandataire: **Landousy, Christian et al
Société Civile S.P.I.D.
156, Boulevard Haussmann
75008 Paris (FR)**

(56) Documents cités:
**US-A- 5 039 870**

• **ELECTRONICS LETTERS vol. 26, no. 2, 18
Janvier 1990, ENAGE GB pages 82 - 84
PERFETTI 'L1 normalisation in neural networks
using parallel automatic level control'**
• **1991 IEEE INTERNATIONAL JOINT
CONFERENCE ON NEURAL NETWORKS vol. 3,
18 Novembre 1991, SINGAPORE pages 343 - 348
TODA 'Polynomial functions can be realized by
finite size multilayer feedforward neural
networks'**
• **PROCEEDINGS OF THE 32ND MIDWEST
SYMPOSIUM ON CIRCUITS AND SYSTEMS 14
Août 1989, CHAMPAIGN, ILLINOIS,USA pages
505 - 508 HU 'A neural network based multiplier'**

## Description

L'invention concerne un processeur neuronal comprenant des moyens de calcul neuronal qui normalisent une donnée d'entrée X par rapport à une autre donnée d'entrée Y en calculant un quotient Q d'une division de X par Y.

Les processeurs neuronaux trouvent leurs applications dans les problèmes de classification en particulier pour la reconnaissance de forme, de caractères, le traitement du signal de la parole, le traitement d'images, la compression de l'information et autres. D'une manière générale les données d'entrée peuvent représenter des quantités physiques.

Des informations sur divers types de réseaux de neurones peuvent par exemple être trouvées dans l'article de R. P. LIPPMANN, "An introduction to computing with neural nets" IEEE ASSP Magazine Avril 1987, p. 4 à 22.

Pour mettre en oeuvre les processus précités dans un processeur neuronal, il peut être nécessaire de normaliser des données par exemple en tant qu'étape intermédiaire lors d'apprentissages successifs. Avantageusement, le processeur neuronal devrait exécuter lui-même l'étape de normalisation. Une telle étape consiste à diviser un lot de données numériques par un facteur qui peut être répétitif.

Indépendamment de l'exécution de tâches de type neuronal (résolution, apprentissage), le processeur neuronal peut également être considéré comme un dispositif de traitement de données numériques effectuant des calculs de normalisation de données.

Une architecture neuronale pour effectuer une division est présentée dans le document : "High-Speed division unit using asymetric neural network architecture" par H. HUANG et P. SIY, Electronics letters, March 1989, vol.25, n°5, pages 344-345. Ce document décrit une architecture neuronale asymétrique qui calcule en cascade chaque bit d'un quotient de deux nombres, représentés en notation binaire, l'un étant un multiple de l'autre. Ce quotient est limité à sa partie entière. Cette architecture est mise en oeuvre dans un processeur neuronal analogique à l'aide d'amplificateurs qui totalisent des sommes de produits de données et qui appliquent une fonction de transfert non-linéaire. Chaque bit du quotient est déterminé successivement en tenant compte de ceux qui le précèdent de sorte que le calcul du quotient peut nécessiter un nombre élevé de cycles de calcul.

Ceci impose aussi que les neurones qui déterminent les bits de poids de plus en plus faibles disposent d'un nombre d'entrées progressivement croissant. Un tel mode opératoire ne peut être transposé dans une technologie numérique sans que ce mode opératoire ne s'en trouve pénalisé.

Parmi d'autres choses, c'est un but de l'invention de concevoir un processeur neuronal qui puisse normaliser des données en effectuant un calcul d'un quotient Q d'une division d'une donnée d'entrée X par une autre donnée d'entrée Y en ne mettant en oeuvre qu'un minimum de moyens matériels sur un nombre réduit de cycles de calcul. Les moyens de calcul doivent pouvoir être aisément reconfigurables pour s'adapter à des données d'entrée X et Y variées et la précision de calcul doit pouvoir être prédéterminée. Il est souhaitable que ceci soit obtenu en modifiant le moins possible l'architecture du processeur neuronal.

Ce but est atteint à l'aide d'un processeur neuronal pour lequel lesdits moyens de calcul sont programmés pour mettre en oeuvre au moins un premier neurone en cascade avec un second neurone pour calculer par récurrence une suite de contributions $\Delta Q_i = q_i.B^i$ formant ensemble une expression du quotient dans une base arithmétique, et pour mettre à jour par récurrence un quotient partiel QP en totalisant lesdites contributions $\Delta Q_i$ pour délivrer le quotient Q comme on décrit dans la revendication 1.

Ainsi avantageusement, il est possible de choisir la dimension de la base B, donc le nombre de contributions $\Delta Q_i$ à calculer et aussi le nombre de neurones, pour obtenir une vitesse d'exécution plus ou moins élevée pour le calcul du quotient Q. On peut ainsi privilégier soit une vitesse élevée avec des moyens matériels multiples soit des moyens matériels réduits avec une vitesse d'exécution plus réduite. Ce fonctionnement par récurrence permet de réduire beaucoup le matériel nécessaire.

Un quotient Q peut être exprimé dans une base B quelconque par :

$$Q = \sum_{i=-m}^{n} q_i.B^i = q_n.B^n + q_{n-1}.B^{n-1}\ldots + q_i.B^i\ldots + q_1.B^1 + q_o.B^o$$
$$+ q_{-1}.B^{-1} + \ldots q_{-m}.B^{-m}$$

Les choix de la dimension de la base ainsi que la valeur de m permettent en outre de prédéterminer la précision du calcul. Pour obtenir Q à une unité près, il suffit de se limiter aux termes allant de $q_n.B^n$ jusqu'à $q_o.B^o$, Q est alors la partie entière du rapport X sur Y. L'invention traite des données X et Y positives. Dans le cas où les données d'entrée sont négatives, il suffit de prendre en compte des valeurs absolues de ces données.

Selon le processeur neuronal de l'invention, on détermine par récurrence tous les termes $q_i.B^i$, $-m \leq i \leq n$, en commençant par le terme le plus élevé $q_n.B^n$. Ces termes sont déterminés dans la base B qui peut être quelconque. Le choix de la base B détermine la manière selon laquelle l'architecture du processeur neuronal est mise en oeuvre.

La dimension B de la base B étant choisie, pour le calcul de chaque terme $q_i.B^i$ on détermine chaque valeur $q_i$, et pour cela on calcule plusieurs termes $j.B^i$ pour lesquels les valeurs j encadrent la valeur $q_i$ à déterminer. Avec une base de dimension B, les valeurs de j sont comprises entre O et B-1. La valeur O ne nécessitant pas de calcul, ces termes sont déterminés pour $1 \leq j \leq$ B-1. Le fonctionnement du processeur neuronal va ainsi nécessiter soit au maximum B-1 neurones ou groupes de neurones fonctionnant en parallèle soit au minimum 1 neurone opérant successivement sur B-1 étapes de calcul. Des situations intermédiaires peuvent être également mises en oeuvre. Une vitesse d'exécution élevée est par exemple obtenue en faisant fonctionner B-1 neurones ou groupes de neurones en parallèle avec une grande dimension pour la base B. Une vitesse d'exécution plus lente peut être obtenue soit en faisant fonctionner un nombre limité de neurones sur plusieurs étapes consécutives soit en choisissant une dimension réduite pour la base B.

Un processeur neuronal est fondamentalement constitué de mémoires stockant des états de neurones $V_i$, de mémoires stockant des coefficients synaptiques $C_{ij}$, d'unités calculant des sommes pondérées $\Sigma\ C_{ij}.V_i$, et d'unités appliquant des fonctions nonlinéaires de transfert auxdites sommes pondérées pour délivrer des états de neurones $V_j$. Ces derniers constituent les résultats des opérations effectuées, c'est-à-dire des résultats de normalisation dans le cadre de l'invention.

Selon le processeur neuronal de l'invention lesdites mémoires et lesdites unités sont programmées par des valeurs initiales, certaines étant permanentes et d'autres étant régulièrement mises à jour, pour effectuer des divisions de deux données d'entrée. A chaque cycle du calcul, on détermine un quotient partiel QP et éventuellement un reste partiel RP qui sont mis à jour. A la fin du calcul, le dernier quotient partiel QP constitue le quotient final Q et RP le reste final. A chaque cycle, les résultats obtenus sont donc recyclés pour le cycle suivant.

Selon une mise en oeuvre, on met en oeuvre uniquement le quotient partiel QP sans calculer le reste partiel RP. Dans ce cas, le quotient partiel QP étant initialement nul, lesdits moyens de calcul sont programmés pour :

a - calculer une pluralité de quantités

$$SD_j = X - (QP_{i+1} + j.B^i).Y$$

ladite pluralité résultant d'un nombre B-1 d'opérations effectuées par au moins un neurone pour j variant de 1 à B-1, i étant un nombre entier initialement égal à un nombre maximal prédéterminé,

b - déterminer une valeur $j = q_i$ qui vérifie :

$$sign\ (SD_j) \neq sign\ (SD_{j+1})$$

$$avec\ SD_0 \geq 0,\ SD_B < 0,\ et\ sign\ (0) = + 1$$

c - déterminer une contribution $\Delta Q_i = q_i.B^i$
et pour mettre en oeuvre ledit second neurone pour déterminer un nouveau quotient partiel tel que :

$$QP_i = QP_{i+1} + \Delta Q_i$$

et pour déterminer le quotient Q en réitérant les opérations précédentes en décrémentant i jusqu'à une valeur minimale qui définit une précision prédéterminée pour Q.

Selon une autre mise en oeuvre, on utilise à la fois le quotient partiel et le reste partiel RP. Dans ce cas, les moyens de calcul sont programmés pour mettre en oeuvre un troisième neurone NR pour calculer en outre un reste partiel $RP_i = X - QP_i.Y$ , le reste partiel, initialement égal à X, étant mis à jour par récurrence tel que :

$$RP_i = RP_{i+1} - Y.\Delta Q_i$$

les moyens de calcul étant programmés pour mettre en oeuvre un groupe desdits premiers neurones :

a - pour calculer une pluralité de quantités $SD_j = RP_{i+1} - j.B^i.Y$ , ladite pluralité résultant d'un nombre B-1 d'opérations pour j variant de 1 à B-1, i étant un nombre entier initialement égal à un nombre maximal prédéterminé,
b - déterminer une valeur $j = q_i$ qui vérifie :

$$\text{sign } (SD_j) \neq \text{sign } (SD_{j+1})$$

$$\text{avec } SD_0 \geq 0, \ SD_B < 0, \text{ et sign } (0) = + 1$$

c - déterminer une contribution $\Delta Q_i = q_i.B^i$ et pour mettre en oeuvre ledit second neurone pour déterminer un nouveau quotient partiel tel que :

$$QP_i = QP_{i+1} + Q_i$$

et pour déterminer le quotient Q en réitérant les opérations précédentes en décrémentant i jusqu'à une valeur minimale qui définit une précision prédéterminée pour Q.

Les B-1 opérations de l'étape a peuvent être effectuées par B-1 neurones ou groupes de neurones programmés pour opérer en parallèle. Les B-1 opérations peuvent également être obtenues par un seul neurone ou groupe de neurones opérant sur B-1 étapes de calcul successifs si la vitesse d'obtention du résultat n'est pas déterminante.

On peut également répartir les B-1 opérations sur des groupes de neurones qui effectuent un traitement partiellement parallèle et partiellement récurrent.

Les étapes a, b et c qui ont pour but de calculer les contributions $\Delta Q_i$ peuvent être réalisées par au minimum un seul neurone selon la dimension de la base B choisie.

L'étape qui a pour but de cumuler les contributions $\Delta Q_i$ successives peut également être réalisée par au minimum un seul neurone.

En opérant avec une base B de dimension 2, le calcul du quotient peut être effectué par seulement 2 neurones.

Les opérations de normalisation de données qui ont été indiquées précédemment apparaissent généralement à l'issu de certaines étapes de traitement neuronal concernant des phases de résolution et/ou d'apprentissage. Il est donc possible d'utiliser des neurones du processeur neuronal pour effectuer une normalisation des données à un moment donné et pour effectuer à un autre moment des étapes de traitement neuronal proprement dit. Il n'est donc pas nécessaire que le processeur neuronal dispose de neurones affectés spécifiquement aux opérations de normalisation. Cependant, le processeur neuronal peut aussi être utilisé uniquement pour des normalisations de données.

Ces différents aspects de l'invention et d'autres encore seront apparents et élucidés à partir des modes de réalisation décrits ci-après.

L'invention sera mieux comprise à l'aide des figures suivantes, données à titre d'exemples non limitatifs, qui représentent :

Figure 1 : un schéma d'une architecture connue de processeur neuronal.

Figure 2 : une représentation schématique A d'un neurone dépourvu d'un moyen d'application d'une fonction non-linéaire, une représentation schématique B d'un neurone muni d'un moyen d'application d'une fonction non-linéaire F et une courbe C représentant une fonction non-linéaire F.

Figure 3 : un schéma d'une première mise en oeuvre des moyens de calcul pour le calcul d'un quotient et d'un reste selon l'invention en calculant $\Delta Q_i$ à partir des restes partiels RP.

Figure 4 : un schéma d'un premier mode de réalisation pour un calcul des contributions $\Delta Q_i$ mettant en oeuvre un reste partiel RP.

Figure 5 : un schéma d'un second mode de réalisation pour un calcul des contributions $\Delta Q_i$ mettant en oeuvre un reste partiel RP.

Figure 6 : un schéma d'une seconde mise en oeuvre des moyens de calcul pour un calcul d'un quotient Q et d'un reste R en calculant $\Delta Q_i$ à partir des quotients partiels QP.

Figure 7 : un schéma d'une mise en oeuvre à trois neurones, pour un calcul d'un quotient Q et d'un reste R dans le cas où la base B a une dimension 2.

Figure 8 : un schéma d'une mise en oeuvre à deux neurones, pour un calcul d'un quotient Q dans le cas où la base B a une dimension 2.

Figure 9 : un schéma d'une unité pour un calcul de termes de type $2^{ki}$ dans le cas où la base B a une dimension du type $2^k$.

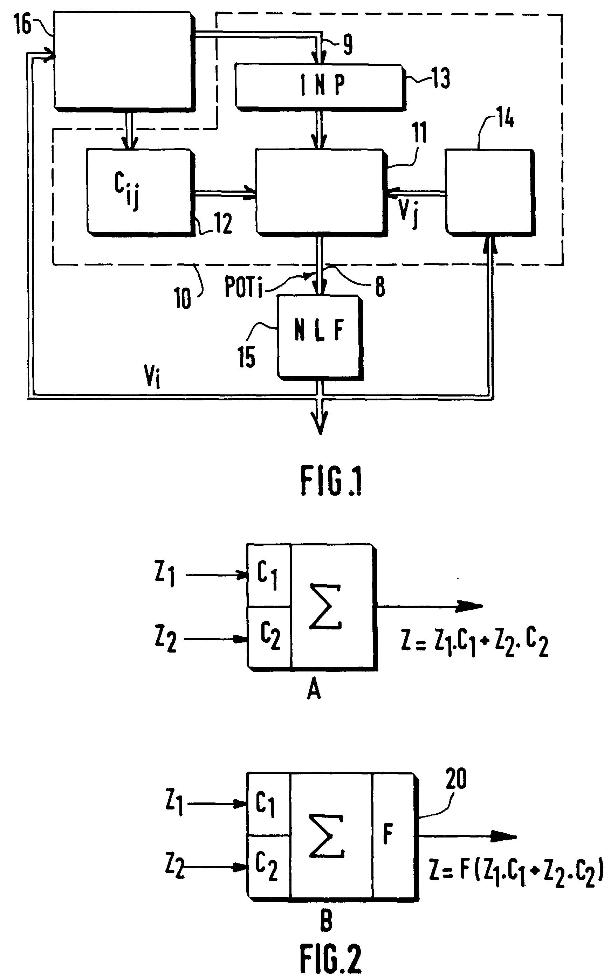

La Figure 1 représente un schéma simplifié d'une architecture connue de processeur neuronal 10. Des moyens d'entrée INP 13 (par exemple des registres d'entrée ou des bornes d'entrée), fournissent des données d'entrée 9 à une unité de traitement 11 qui reçoit également des coefficients synaptiques $C_{ij}$ stockés dans des moyens de stockage 12. Un coefficient synaptique $C_{ij}$ caractérise le poids de la synapse qui connecte un neurone source j à un neurone destination i. L'unité de traitement 11 reçoit également des états de neurones stockés dans des moyens de stockage 14.

Lorsqu'un neurone opère en tant que neurone source, son état est référencé par $V_j$ et lorsqu'il opère en tant que neurone destination, son état est référencé par $V_i$. Pour chaque neurone destination, l'unité de traitement 11 opère des calculs :

$$POT_i = \sum_j C_{ij} \cdot V_j$$

L'unité de traitement 11 effectue la sommation sur tous les neurones source d'indice j et fournit en sortie (connexion 8) le potentiel neuronal $POT_i$ du neurone destination i. Ce potentiel neuronal $POT_i$ est soumis à l'action d'une fonction non-linéaire NLF 15 qui fournit le nouvel état de neurone $V_i$ du neurone destination i. Ce nouvel état $V_i$ est utilisé pour mettre à jour les moyens de stockage 14 et le processus continue pour d'autres neurones. Les moyens d'application 15 de la fonction non-linéaire NLF sont représentés extérieurs au processeur neuronal 10. Cette figure 1 est seulement illustrative de l'architecture car ces moyens d'application 15 peuvent également être placés à l'intérieur du processeur neuronal 10. Ils peuvent également concerner une partie seulement des neurones. Un calculateur hôte 16 gère l'ensemble des processus mis en oeuvre dans le processeur neuronal. Par souci de simplification, d'autres organes tels que des moyens de contrôle, des moyens d'apprentissage, ont été omis.

Fondamentalement, un processeur neuronal délivre et reçoit des configurations de signaux représentant des grandeurs physiques. Dans le processeur neuronal ces configurations de signaux apparaissent sous forme d'états de neurones.

Par exemple, le processeur neuronal peut être utilisé pour trier, dans une groupe d'éléments, des éléments de classes différentes A, B, C... Des états de neurones calculés permettent de dénombrer ces différentes classes. Au cours de certains traitements, par exemple pour l'apprentissage, il peut être nécessaire que les données d'entrée soient exprimées par rapport à une norme. Ainsi, il peut être nécessaire par exemple de normaliser toutes les données en faisant que la donnée maximale ne dépasse pas une borne maximale. Il faut alors normaliser, c'est-à-dire diviser toutes les données par la donnée maximale. Il peut d'ailleurs s'agir de données issues d'une origine externe au processeur neuronal.

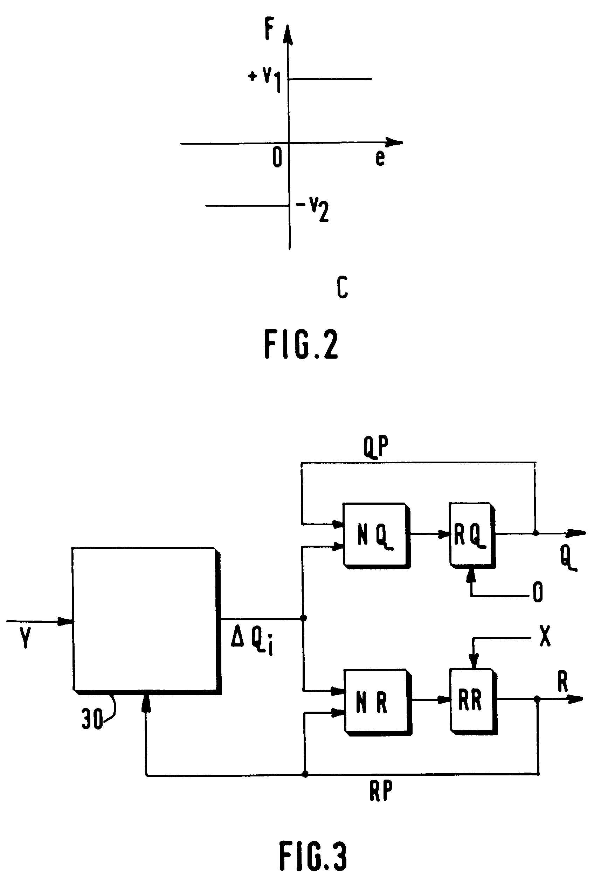

L'invention met en oeuvre deux types de neurones. Un premier type de neurone (Figure 2-A), qui opère en sommateur, est démuni de moyens pour appliquer une fonction non-linéaire F. Il comprend, fondamentalement, des moyens pour stocker deux coefficients synaptiques $C_1$, $C_2$ qui sont respectivement multipliés par des valeurs d'entrée $Z_1$ et $Z_2$ pour former des produits $Z_1.C_1$ et $Z_2.C_2$. Ces produits sont additionnés dans un sommateur $\Sigma$ qui délivre une valeur de sortie Z telle que :

$$Z = Z_1.C_1 + Z_2.C_2.$$

Un second type de neurone (Figure 2-B), qui opère en organe de test, comprend les mêmes éléments que ceux du premier type, avec en plus des moyens 20 (par exemple un comparateur) pour appliquer une fonction non- linéaire F. La sortie du neurone délivre ainsi une valeur Z telle que :

$$Z = F (Z_1.C_1 + Z_2.C_2)$$

La fonction non-linéaire F a une représentation fournie par la Figure 2-C. Les moyens 20 (Figure 2-B) ont une entrée e qui reçoit le signal de sortie du sommateur $\Sigma$ qui est comparé à une valeur nulle. Lorsque cette entrée e reçoit d'une part des signaux négatifs ou d'autre part des signaux positifs, les moyens 20 délivrent une sortie valant respectivement $- v_2$ ou $+ v_1$. Dans la majeure partie des modes de réalisation décrits ci-après les valeurs $+ v_1/- v_2$ peuvent être égales à 1/0, j/0, $B^i/0$.

Première mise en oeuvre (première famille)

La Figure 3 représente schématiquement une première mise en oeuvre des moyens de calculs qui sont programmés pour normaliser une valeur X par rapport à une valeur Y. Des moyens 30 calculent successivement les contributions $\Delta Q_i = q_i.B^i$ à partir, d'une part, de la valeur de la donnée Y et d'autre part, d'un reste partiel RP. Initialement QP = O et RP = X. Chaque contribution $\Delta Q_i$ sert à mettre à jour RP et QP selon :

$$QP_i = QP_{i+1} + \Delta Q_i$$

et

$$RP_i = RP_{i+1} - Y.\Delta Q_i$$

où i est un nombre entier qui décroît à partir d'une valeur maximale $i_{max}$.

Ces mises à jour mettent en oeuvre deux neurones NQ et NR du premier type décrit. Chaque neurone est rebouclé sur lui-même pour opérer en accumulateur. Ce fonctionnement en boucle nécessite que chaque neurone NQ, NR soit suivi respectivement d'un registre RQ, RR qui stocke le résultat pendant un cycle élémentaire de calcul. Le registre RQ est initialisé à zéro, le registre RR est initialisé à X et les coefficients synaptiques $C_1$, $C_2$ des deux neurones sont programmés.

Les valeurs des paramètres $Z_1$, $C_1$, $Z_2$, $C_2$ de chacun des neurones sont indiquées sur le tableau I.

|  | $Z_1$ | $C_1$ | $Z_2$ | $C_2$ |
|---|---|---|---|---|
| NQ | $QP_{i+1}$ | 1 | $\Delta Q_i$ | 1 |
| NR | $RP_{i+1}$ | 1 | $\Delta Q_i$ | - Y |

TABLEAU I

Détermination des contributions $\Delta Q_i$

- Premier mode de réalisation

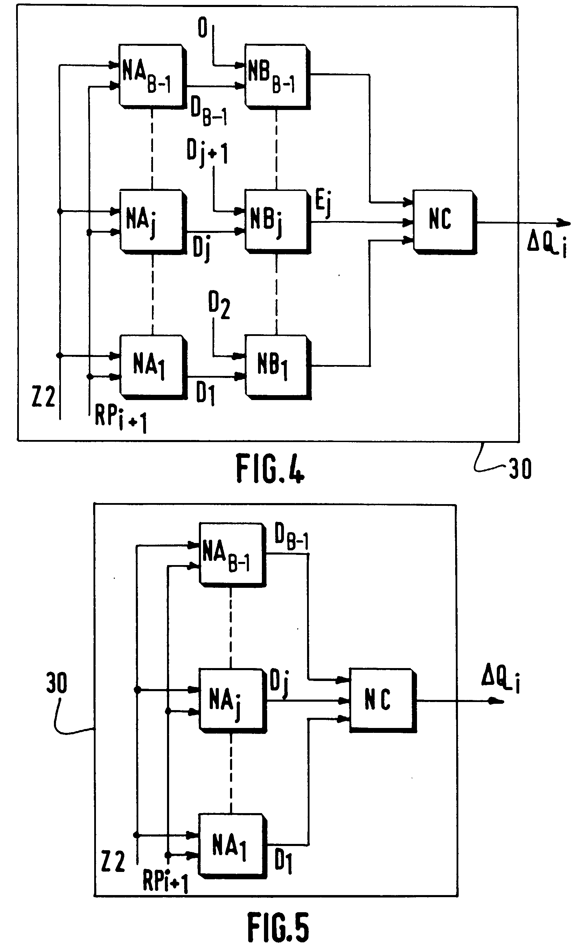

La Figure 4 représente un premier mode de réalisation des moyens 30 pour la première famille de la première mise en oeuvre. La base dans laquelle le quotient Q est exprimé a une dimension B. Préférentiellement, on utilise une couche de B-1 neurones $NA_j$ ($1 \leq j \leq B-1$) fonctionnant en parallèle pour déterminer, pour i donné, un nombre B-1 de termes $SD_j = RP_{i+1} - j. B^i.Y$ avec $1 \leq j \leq B-1$. Un neurone supplémentaire n'est pas nécessaire pour le calcul du terme avec j = O. Ces neurones $NA_j$ reçoivent tous $Z_2$ et $RP_{i+1}$. Ils sont programmés pour déterminer des quantités $SD_j$ dont la valeur dépend de l'indice j du rang du neurone dans la couche. Les termes $SD_j$ constituent les potentiels neuronaux POT des neurones.

La détermination du terme $j.B^i.Y$ peut donner lieu à plusieurs combinaisons. Les paramètres $Z_1$, $C_1$, $Z_2$, $C_2$ des neurones $NA_j$ peuvent être programmés selon le tableau II qui indique trois combinaisons :

|  | $Z_1$ | $C_1$ | $Z_2$ | $C_2$ |
|---|---|---|---|---|
| $NA_j$ | $RP_{i+1}$ | 1 | Y | $- j.B^i$ |
|  | $RP_{i+1}$ | 1 | $B^i$ | $- jY$ |
|  | $RP_{i+1}$ | 1 | $Y.B^i$ | $- j$ |

TABLEAU II

Toutes ces quantités $SD_j$ sont testées pour déterminer leur signe et pour en déduire l'indice $j = q_i$ de la plus faible quantité $SD_j$ positive ou nulle. Pour mettre en oeuvre des tests, on utilise des neurones $NA_j$ du second type, c'est-à-dire comprenant chacun un moyen d'application d'une fonction non-linéaire F aux potentiels neuronaux POT. Cette fonction F peut être une fonction $F_1$ définie par :

$$F_1 (SD_j) = D_j = 1 \qquad lorsque \qquad SD_j \geq 0$$

$$F_1 (SD_j) = D_j = 0 \qquad \text{lorsque} \qquad SD_j < 0$$

Ainsi pour $1 \leq j \leq q_i$ toutes les sorties $D_j$ sont à 1, et pour $q_i < j \leq B\text{-}1$ toutes les sorties $D_j$ sont à 0.

Une seconde couche de neurones $NB_j$ $(1 \leq j \leq B\text{-}1)$ compare deux à deux des sorties $D_j$ et $D_{j+1}$ consécutives. Ainsi seul un neurone $NB_j$, de rang $j = q_i$, a deux entrées $D_j$ et $D_{j+1}$ différentes et seul ce neurone a une sortie égale à $q_i$, les autres neurones ayant une sortie nulle. Pour cela, les paramètres $Z_1$, $C_1$, $Z_2$, $C_2$ des neurones $NB_j$ sont programmés selon le tableau III (avec $D_B = 0$) :

| | $Z_1$ | $C_1$ | $Z_2$ | $C_2$ |
|---|---|---|---|---|
| $NB_j$ | $D_j$ | 1 | $D_{j+1}$ | $-1$ |

TABLEAU III

Pour obtenir que les sorties des neurones $NB_j$ délivrent directement l'indice $j$ de chaque neurone $NB_j$ dans la couche (lorsque $D_j \neq D_{j+1}$), on utilise des neurones du second type munis de moyens d'application d'une fonction $F_2$ ayant une réponse :

$$E_j = 0 \qquad \text{lorsque} \qquad e \leq 0$$

$$E_j = j \qquad \text{lorsque} \qquad e > 0.$$

Une troisième couche est formée par un neurone à multientrées NC du premier type, chacune des entrées étant programmée selon le tableau IV :

| | $Z_j$ | $C_j$ |
|---|---|---|
| NC | $E_j$ | $B^i$ |

TABLEAU IV

Selon une variante de ce premier mode de réalisation, il est possible que les coefficients $C_j$ du neurone NC soient programmés à la valeur 1 dans la mesure où les moyens d'application de la fonction non-linéaire F des neurones $NB_j$ opèrent avec une fonction $F_3$ telle que :

$$E_j = 0 \qquad \text{lorsque} \qquad e \leq 0$$

$$E_j = j.B^i \qquad \text{lorsque} \qquad e > 0.$$

Les tableaux I à IV indiquent différents types de coefficients :

- des coefficients fixes par exemple 1, -1 qui sont chargés au moment où le processeur neuronal est utilisé pour des tâches de normalisation en liaison avec la dimension de la base B,
- des coefficients par exemple Y, X qui dépendent des données mises en oeuvre et qui sont chargés pour chaque nouvelle donnée X ou Y,
- des coefficients contenant des termes $B^i$ qui sont modifiés à chaque cycle récurrent. Ces coefficients multiples de $B^i$ sont chargés au début de chaque cycle par le calculateur hôte qui gère également les entrées des neurones correspondantes en commençant par les coefficients $B^i$ les plus élevés. La valeur de i est limitée par une valeur maximale $i_{max}$ qui détermine la capacité de traitement. Il est possible de prévoir un processeur neuronal ayant une architecture figée avec une base B déterminée (donc un nombre B-1 de neurones $NA_j$, $NB_j$) avec une valeur $i_{max}$ prédéterminée. Il est également possible de prévoir que l'utilisateur choisisse la dimension de la base B et choisisse la valeur $i_{max}$ en fonction des capacités matérielles du processeur neuronal et programme les coefficients, en conséquence. Ces choix sont à opérer selon les valeurs X et Y des données mises en oeuvre.

A titre d'exemple, dans le cas où X et Y sont des nombres entiers tels que $0 \leq X \leq 2^r -1$ et $1 \leq Y \leq 2^r -1$, on peut choisir pour $i_{max}$ le plus petit entier tel que $2^r \leq B^{(i_{max} + 1)}$. La valeur $i_{max}$ a alors l'avantage de ne pas dépendre des données X et Y.

Second mode de réalisation

Dans le cadre de la première mise en oeuvre (première famille), il peut être utile de limiter le nombre de neurones qui participent à la normalisation des données. La Figure 5 représente une situation où la couche de neurones $NB_j$ n'existe pas.

Les neurones $NA_j$ reçoivent sur leur entrée des données correspondant toujours au tableau II et leur fonction non-linéaire est toujours la fonction $F_1$. Toutes les sorties $D_j$ entrent dans un neurone NC du premier type qui est programmé selon le tableau IV en substituant $D_j$ à $E_j$. Le neurone NC totalise ainsi un nombre $q_i$ de contributions $B^i$ correspondant aux entrées $D_j = 1$.

Selon une variante de ce second mode de réalisation, il est possible que les coefficients $C_j$ du neurone NC soient programmés à la valeur 1 dans la mesure où les moyens d'application de la fonction non-linéaire F des neurones $NA_j$ opèrent avec une fonction $F_4$ telle que :

$$F_4(SD_j) = D_j = B^i \qquad \text{lorsque} \qquad SD_j \geq 0$$

$$F_4(SD_j) = D_j = 0 \qquad \text{lorsque} \qquad SD_j < 0.$$

Première mise en oeuvre (deuxième famille)

A chacune des structures précédemment décrites dans la première famille correspond une variante obtenue en fusionnant le neurone NC avec d'une part le neurone NQ et d'autre part le neurone NR. Ceci est obtenu :

- en supprimant le neurone NC qui recevait auparavant des entrées $V_j$, égales à $E_j$ ou $D_j$ suivant le mode de réalisation, et qui avait des coefficients $C_j$ égaux soit à 1 soit à $B^i$ suivant le cas considéré,
- en remplaçant le neurone NQ de la figure 3 par un neurone du premier type à B entrées, programmé suivant le tableau V-A, dans lequel les $V_j$ et $C_j$ sont ceux du neurone NC précédemment utilisé.

TABLEAU V-A

| $Z_1$ | $C_1$ | $Z_2$ à $Z_B$ | $C_2$ à $C_B$ |
|---|---|---|---|
| $QP_{i+1}$ | 1 | $V_j$ | $C_j$ |

- en remplaçant le neurone NR de la figure 3 par un neurone du premier type à B entrées, programmé suivant le tableau V-B (avec la même signification pour $V_j$ et $C_j$) :

TABLEAU V-B

| $Z_1$ | $C_1$ | $Z_2$ à $Z_B$ | $C_2$ à $C_B$ |
|---|---|---|---|
| $RP_{i+1}$ | 1 | $V_j$ | $- C_j.Y$ |

Cette variante comporte une couche de moins que précédemment.

## Deuxième mise en oeuvre

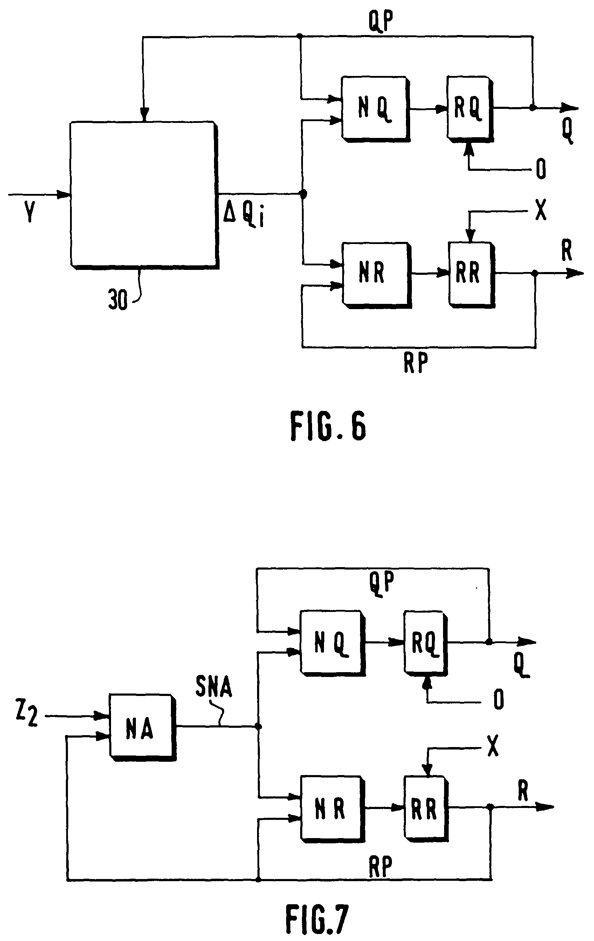

La figure 6 représente schématiquement une deuxième mise en oeuvre. Comme dans la première mise en oeuvre, un neurone NR délivre un reste final à la fin du calcul. Toutefois, le bloc 30 utilise maintenant le quotient partiel QP pour calculer $\Delta Q_i$. Alors à chacune des structures présentées pour la première mise en oeuvre correspond une structure qui lui est analogue, hormis pour les neurones $NA_j$ intervenant dans le calcul de $\Delta Q_i$. La première couche de neurones intervenant dans le calcul $\Delta Q_i$ est formée de neurones $NA_j$ à trois entrées du type représenté sur la Figure 2-B avec une entrée $Z_3$ et un coefficient synaptique $C_3$ supplémentaires. Le tableau VI donne les paramètres $Z_1$, $C_1$, $Z_2$, $C_2$, $Z_3$, $C_3$ des neurones $NA_j$.

|  | $Z_1$ | $C_1$ | $Z_2$ | $C_2$ | $Z_3$ | $C_3$ |
|---|---|---|---|---|---|---|
| $NA_j$ | X | 1 | Y | $-jB^i$ | $QP_{i+1}$ | $-Y$ |
|  | X | 1 | $B^i$ | $-jY$ | $QP_{i+1}$ | $-Y$ |
|  | X | 1 | $Y.B^i$ | $-j$ | $QP_{i+1}$ | $-Y$ |

TABLEAU VI

Pour la détermination de $\Delta Q_i$, on utilise préférentiellement la structure décrite pour le deuxième mode de réalisation présenté pour la première mise en oeuvre.

## Troisième mise en oeuvre

La troisième mise en oeuvre correspond au cas où on n'introduit pas le neurone NR, et où le seul résultat fourni par la structure est le quotient final (alors que le reste final n'est pas fourni).

Ceci permet d'ignorer le calcul de RP. Les structures correspondant à cette troisième mise en oeuvre sont identiques aux structures correspondant à la deuxième mise en oeuvre, à part qu'elles ne contiennent pas le neurone NR et le registre RR.

Pour la détermination de $\Delta Q_i$, on utilise préférentiellement une structure analogue à celle de la figure 5 déduite de celle-ci dans son application à la deuxième mise en oeuvre.

Par ailleurs, il est avantageux d'utiliser la deuxième famille décrite précédemment dans laquelle le neurone NC est fusionné avec le neurone NQ car alors on obtient deux avantages :

- comme précédemment, on supprime une couche dans la structure,
- on n'a pas à dupliquer le calcul de $\Delta Q_i$ car NR n'existe pas.

## Mise en oeuvre spécifique à B = 2

Un cas intéressant par la simplicité des moyens matériels mis en oeuvre correspond au cas où la base B a une dimension 2. Dans ce cas, la détermination des valeurs $q_i$ ne nécessite qu'un seul neurone. La Figure 7 représente un exemple de réalisation qui met en oeuvre des déterminations de quotients partiels QP et de restes partiels RP. Trois neurones NA, NR, NQ sont suffisants pour déterminer le quotient Q et le reste R. La sortie SNA du neurone NA fournit soit les valeurs $q_i$ soit les contributions $q_i.B^i$ selon les fonctions non-linéaires mises en oeuvre. Les neurones NQ et NR sont du premier type et sont suivis respectivement des registres de stockage RQ et RR. La programmation des paramètres Z, C du neurone NA (du deuxième type) est effectuée selon le tableau II avec j = 1. La fonction non-linéaire F, appliquée aux données issues du sommateur de NA, peut être faite comme préalablement selon les fonctions $F_1$ ou $F_4$. Dans le cas de la fonction $F_4$, les paramètres Z, C des neurones NQ et NR peuvent être programmés selon le tableau I en remplaçant $\Delta Q_i$ par SNA. Dans le cas de la fonction $F_1$, les paramètres Z, C des neurones NQ et NR peuvent être programmés selon le tableau VII.

| | $Z_1$ | $C_1$ | $Z_2$ | $C_2$ |
|---|---|---|---|---|
| NQ | $QP_{i+1}$ | 1 | SNA | $2^i$ |
| NR | $RP_{i+1}$ | 1 | SNA | $- 2^i.Y$ |

TABLEAU VII

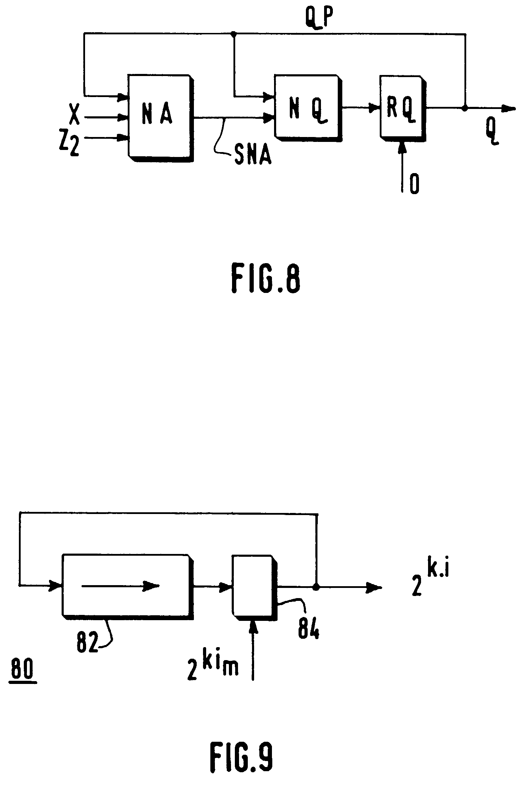

Avec B = 2, il est encore possible, selon le schéma de la Figure 8, de réduire à deux neurones seulement les moyens matériels. Dans ce cas, une détermination des restes partiels n'est pas mise en oeuvre. Les paramètres du neurone NA sont les mêmes que ceux du tableau VI avec j = 1. Les paramètres du neurone NQ et la fonction F sont les mêmes que ceux de la mise en oeuvre pour B = 2.

Cas où B = $2^k$

Lorsque la dimension de la base peut être écrite sous la forme B = $2^k$, où k est un nombre entier, il est possible d'utiliser une unité qui calcule par récurrence certaines valeurs où interviennent des valeurs $B^i$. C'est par exemple le cas avec les valeurs $\pm$ j.$B^i$ et $\pm$ Y.$B^i$. La Figure 9 représente un tel module 80 comprenant un registre à décalage 82 à k positions suivi d'un registre 84 qui peut être initialisé par une valeur d'initialisation $2^{k.imax}$. La sortie du registre 84 délivre des coefficients $B^i = 2^{k.i}$ qui sont également réintroduits à l'entrée du registre à décalage 82. En décalant à chaque fois la donnée d'entrée de k positions, il est possible de la diviser par un facteur $2^k$ et calculer ainsi tous les coefficients $B^i$ successifs pour la mise en oeuvre des méthodes décrites. Ce module 80 peut être utilisé pour déterminer des paramètres Z et/ou C.

Dépassements

Le processeur neuronal doit stocker différents paramètres Z, C, différentes données d'entrées, X, Y et des résultats QP, RP. Pour cela, le processeur neuronal dispose d'une capacité de traitement qui dépend des capacités maximales des registres et des mémoires.

Dans le cas général, si la capacité des registres d'états de neurones et des mémoires de coefficients synaptiques permet de stocker des mots signés de (r+1) bits, il est alors possible de traiter par exemple des données X et Y telles que $0 \le X \le 2^r-1$ et $1 \le Y \le 2^r-1$ où X et Y sont des nombres entiers. Néanmoins, les calculs intermédiaires mettent en jeu des termes j.$B^i$ Y qui peuvent être calculés de plusieurs manières, telles que celles indiquées dans le tableau II. Suivant la structure considérée, il peut se produire que, quand on n'impose aucune contrainte aux valeurs des paramètres r, B, Y, certains des calculs intermédiaires utilisés pour le calcul de j.$B^i$ Y par les neurones NA nécessitent des mots ayant plus de (r+1) bits. Plusieurs solutions existent à ce problème potentiel :

1) Ne pas imposer de limitations aux paramètres r, B, Y (hormis $1 \le Y \le 2^r-1$), et choisir en conséquence la taille des registres internes, suivant le mode de réalisation considéré.

2) Imposer que tous les registres aient pour taille (r+1) bits, et imposer des limitations aux paramètres r, B, Y, suivant les moyens matériels dont on dispose et les modes de programmation choisis dans le tableau II. Des limitations telles que celles indiquées ci-dessous suffisent à éviter tout problème :

- imposer que B soit une puissance de 2, B = $2^k$, et que r soit un multiple de k. En particulier, il n'y a pas de problème de dépassement quand B = 2 et r est quelconque,
- ou, imposer une limite $Y_{max}$ à Y, où $Y_{max}$ est une valeur qui est choisie de façon à ce que toutes les quantités entrant en jeu dans le calcul de j.$B^i$ Y (par exemple $Z_2 = Y.B^i$ ou $C_2 = - jY$ dans le tableau II) puissent être stockées dans des registres ayant (r+1) bits.

3) Imposer que tous les registres aient pour taille (r+1) bits, et ne pas imposer de limitations aux paramètres r, B, Y, et choisir des valeurs spécifiques pour les coefficients. Supposons que la capacité de stockage de chaque registre soit (r+1) bits. Le stockage de $RP_{i+1}$ n'entraîne pas de dépassement pour un système correctement étudié. Par contre, le calcul des termes $SD_j = RP_{i+1} - j.B^i$ Y peut entraîner des dépassements pour certaines valeurs de j et/ou de i conduisant à des termes $SD_j$ négatifs. Ensuite, il suffit de détecter un signe négatif pour $SD_j$. Ceci peut être obtenu aisément en programmant dans le tableau II des coefficients $C_1 = 0$ et $C_2 = - 1$ pour les valeurs j et i qui conduiraient à un dépassement. Cette programmation est gérée par le calculateur hôte.

L'homme du métier pourra donc être conduit à choisir l'un ou l'autre des modes de programmation donnés, par exemple dans les tableaux II ou VI et l'une des solutions aux problèmes de dépassement, en fonction de la taille des registres et des mémoires disponibles dans le processeur neuronal, des données à traiter et des performances visées.

L'invention peut être utilisée pour traiter des données X et Y représentées par des nombres entiers ou quelconques.

Les différentes mises en oeuvre prennent toute leur importance lors de l'utilisation effective du processeur. Elles diffèrent en ce que :

. le nombre de neurones est plus ou moins élevé, des entrées Z supplémentaires, par exemple égales à $B^i$ ou à un multiple de cette valeur sont ou ne sont pas nécessaires,

. les coefficients synaptiques sont fixes ou variables au cours d'une ou plusieurs divisions,

. les fonctions de transfert des comparateurs sont fixes ou variables au cours d'une division,

. des variables externes ou internes au fonctionnement apparaissent comme états de neurones ou comme coefficients synaptiques, et si les registres respectifs n'ont pas la même taille, les valeurs maximales acceptables pour ces variables sont plus ou moins élevées, c'est-à-dire que les problèmes de dépassement doivent être traités différemment.

**Revendications**

1. Processeur neuronal (10) comprenant des moyens de calcul neuronal (11-15) qui normalisent une donnée d'entrée X par rapport à une autre donnée d'entrée Y en calculant un quotient Q d'une division de X par Y, caractérisé en ce que lesdits moyens de calcul sont programmés pour mettre en oeuvre au moins un premier neurone (30) (($NA_1$ - $NA_{B-1}$) ($NB_1$ - $NB_{B-1}$) (NC)) en cascade avec un second neurone (NQ), le premier neurone étant pour calculer par récurrence une suite de contributions $\Delta Q_i = q_i.B^i$ formant ensemble une expression du quotient Q dans une base arithmétique B par

$$Q = \sum_{i=-m}^{n} q_i.B^i;$$

le choix de la dimension de la base, B, ainsi que la valeur de m permettant de prédéterminer la précision du calcul, et le second neurone étant pour mettre à jour par récurrence un quotient partiel QP selon $QP_i = QP_{i+1} + \Delta Q$; en totalisant lesdites contributions $\Delta Q_i$ pour délivrer le quotient Q en fin de calcul.

2. Processeur selon la revendication 1 caractérisé en ce que le quotient partiel QP étant initialement nul, lesdits moyens de calcul (11-15) sont programmés pour mettre en oeuvre un groupe desdits premiers neurones pour :

    a - calculer une pluralité de quantités

$$SD_j = X - (QP_{i+1} + j.B^i).Y$$

    ladite pluralité résultant d'un nombre B-1 d'opérations pour j variant de 1 à B-1, i étant un nombre entier initialement égal à un nombre maximal prédéterminé,
    b - déterminer une valeur $j = q_i$ qui vérifie :

$$\text{sign}(SD_j) \neq \text{sign}(SD_{j+1})$$

avec $SD_0 \geq 0$, $SD_B < 0$, et $\text{sign}(0) = +1$

    c - déterminer une contribution $\Delta Q_i = q_i.B^i$ et pour mettre en oeuvre ledit second neurone pour déterminer un nouveau quotient partiel tel que :

$$QP_i = QP_{i+1} + \Delta Q_i$$

et pour déterminer le quotient Q en réitérant les opérations précédentes en décrémentant i jusqu'à une valeur i minimale qui définit une précision prédéterminée pour Q.

3. Processeur selon la revendication 1 caractérisé en ce que les moyens de calcul (11-15) sont programmés pour mettre en oeuvre en outre un troisième neurone (NR) pour calculer un reste partiel $RP_i = X - QP_i.Y$, le reste partiel, initialement égal à X, étant mis à jour par récurrence tel que :

$$RP_i = RP_{i+1} - Y.\Delta Q_i$$

et en ce que les moyens de calcul sont programmés pour mettre en oeuvre un groupe desdits premiers neurones $(NA_1 - NA_{B-1})$ :

a - pour calculer une pluralité de quantités $SD_j = RP_{i+1} - j.B^i.Y$, ladite pluralité résultant d'un nombre B-1 d'opérations pour j variant de 1 à B-1, i étant un nombre entier initialement égal à un nombre maximal prédéterminé, b - déterminer une valeur $j = q_i$ qui vérifie :

$$\text{sign}(SD_j) \neq \text{sign}(SD_{j+1})$$

$$\text{avec } SD_0 \geq 0, SD_B < 0, \text{ et sign}(0) = +1$$

c - déterminer une contribution $\Delta Q_i = q_i.B^i$ et pour mettre en oeuvre ledit second neurone pour déterminer un nouveau quotient partiel tel que :

$$QP_i = QP_{i+1} + \Delta Q_i$$

et pour déterminer le quotient Q en réitérant les opérations précédentes en décrémentant i jusqu'à une valeur i minimale qui définit une précision prédéterminée pour Q.

4. Processeur selon une des revendications 2 ou 3 modifiées en ce que le second neurone (NQ) reçoit les valeurs $q_i$ en provenance du groupe de premiers neurones et détermine les quantités $\Delta Q_1 = q_i.B^i$ en même temps qu'il effectue la détermination des nouveaux quotients partiels et du quotient Q.

5. Processeur neuronal (10) selon la revendication 1 caractérisé en ce que pour B = 2 le processeur neuronal opère soit avec deux neurones formés d'un dit premier neurone et d'un dit second neurone pour calculer le quotient Q, soit avec trois neurones formés d'un dit premier neurone, d'un dit second neurone pour calculer le quotient Q et d'un troisième neurone (NR) pour calculer un reste R.

6. Processeur caractérisé en ce que lesdits moyens de calcul (11-15) sont programmables pour effectuer à un moment une division selon une des revendications 1 à 5 et, à un autre moment, pour effectuer des tâches neuronales de résolution et/ou d'apprentissage.

**Patentansprüche**

1. Neuronaler Prozessor (10) mit neuronaler Berechnungsanlage (11-15) zur Normierung von Eingangsdaten X in bezug auf andere Eingangsdaten Y unter Berechnung eine Quotienten Q einer Division von X durch Y, mit dem Merkmal, daß die besagten Berechnungsmittel programmiert sind, um mindestens ein erstes Neuron (30) $((NA_1 - NA_{B-1}), (NB_1 - NB_{B-1}) (NC))$ in Serie mit einem zweiten Neuron (NK) vorzusehen, um mit dem ersten Neuron wiederkehrend eine Serie von Beiträgen $\Delta Q_i = q_i.B^i$ zu berechnen, die zusammen einen Ausdruck des Quotienten Q in einer arithmetischen Basis B bildet, über

$$Q = \sum_{i=-m}^{n} q_i.B^i;$$

wobei die Wahl der Dimension der Basis B sowie des Wertes von m die Vorbestimmung der Rechenpräzision ermöglichen, und um mit dem zweiten Neuron periodisch einen Teilquotienten QP hervorzubringen, gemäß $QP_i = QP_{i+1} + \Delta Q_i$, indem die besagten Beiträge $\Delta Q_i$ für die Lieferung des Quotienten Q am Ende der Rechnung zusammengezählt werden.

2. Prozessor laut Anspruch 1, mit dem Merkmal, daß mit dem Teilquotienten QP, der anfänglich Null ist, die besagten Berechnungsmittel (11-15) programmiert sind, um eine Gruppe der besagten ersten Neuronen zu verwenden, um :

   a - eine Vielzahl an Mengen

$$SD_j = X - (QP_{i+1} + j.B^i).Y$$

   zu berechnen, die besagte Vielzahl ergibt sich aus einer Zahl B-1 von mindestens einem Neuron durchgeführter Operationen, wobei j von 1 bis B-1 variiert und i eine Ganzzahl ist, ursprünglich gleich einer vorbestimmten Höchstzahl,

   b - einen Wert $j = q_i$ zu bestimmen, der prüft:

$$\text{sign}(SD_j) \neq \text{sign}(SD_{j+1})$$

$$\text{mit } SD_0 \geq 0, SD_B < 0, \text{ und sign}(0) = +1$$

   c - einen Beitrag $\Delta Q_i = q_i.B^i$ zu bestimmen,
   und um das besagte zweite Neuron für die Bestimmung eines neuen Teilquotienten zu verwenden, wie :

$$QP_i = QP_{i+1} + \Delta Q_i$$

   und um den Quotienten Q durch Wiederholung der vorhergehenden Operationen unter Verminderung von i auf einen minimalen Wert i zu bestimmen, der eine vorbestimmte Genauigkeit für Q definiert.

3. Prozessor laut Anspruch 1, mit dem Merkmal, daß die Berechnungsmittel (11-15) programmiert sind, um außerdem ein drittes Neuron (NR) zu verwenden, um u.a. einen Teilrest $RP_i = X - QP_i.Y$ zu berechnen, während der Teilrest, ursprünglich gleich X, wiederholt aktualisiert wird, wie :

$$RP_i = RP_{i+1} - Y.\Delta Q_i$$

   und daß die Berechnungsmittel für die Verwendung einer Gruppe der besagten ersten Neuronen ($NA_1 - NA_{B-1}$) programmiert sind :

   a - zur Berechnung einer Vielzahl an Mengen $SD_j = RP_{i+1} - j.B^i.Y$, die besagte Vielzahl ergibt sich aus einer Zahl B-1 Operationen, wobei j von 1 bis B-1 variiert und i eine Ganzzahl ist, ursprünglich gleich einer vorbestimmten Höchstzahl,

   b - zur Bestimmung eines Wertes $j = q_i$, der prüft:

$$\text{sign}(SD_j) \neq \text{sign}(SD_{j+1})$$

mit $SD_0 \geq 0$, $SD_B < 0$, und sign $(0) = +1$

c - zur Bestimmung eines Beitrags $\Delta Q_i = q_i.B^i$
und zur Verwendung des besagten zweiten Neurons für die Bestimmung eines neuen Teilquotienten, wie :

$$QP_i = QP_{i+1} + \Delta Q_i$$

und um den Quotienten Q durch Wiederholung der vorhergehenden Operationen unter Verminderung von i auf einen minimalen Wert i zu bestimmen, der eine vorbestimmte Genauigkeit für Q definiert.

4. Prozessor laut einem der veränderten Ansprüche 2 oder 3, wobei das zweite Neuron (NQ) die Werte $q_i$ von einer Gruppe erster Neuronen erhält und die Mengen $\Delta Q_1 = q_i.B^i$ bestimmt, zur gleichen Zeit, in der er die Bestimmung der neuen Teilquotienten und des Quotienten Q vornimmt.

5. Neuronaler Prozessor (10) laut Anspruch 1, mit dem Merkmal, daß für B = 2 der neuronale Prozessor entweder mit zwei Neuronen arbeitet, gebildet aus einem besagten ersten und einem besagten zweiten Neuron, für die Berechnung des Quotienten Q, oder mit drei Neuronen, gebildet aus einem besagten ersten Neuron, einem besagten zweiten Neuron zur Berechnung des Quotienten Q und einem dritten Neuron (NR) zur Berechung eines Rests R.

6. Prozessor mit dem Merkmal, daß die besagten Berechnungsmittel (11-15) programmierbar sind, um zu einem Zeitpunkt eine Teilung gemäß einem der Ansprüche 1 bis 5 durchzuführen und um zu einem anderen Zeitpunkt neuronale Aufgaben der Aufslöung und/oder Erlernung durchzuführen.

## Claims

1. A neural processor (10), comprising neural calculation means (11-15) which normalize an input data X with respect to another input data Y by calculating a quotient of a division of X by Y, characterized in that said calculation means are programmed to activate at least one first neuron (30) (($NA_1$ - $NA_{B-1}$), ($NB_1$ - $NB_{B-1}$), (NC)) in cascade with a second neuron (NQ), the first neuron being arranged to calculate iteratively a series of contributions $\Delta Q_i = q_i.B^i$ which together form an expression of the quotient Q on an arithmetic base as

$$Q = \sum_{i=-m}^{n} q_i.B^i,$$

the choice of the size of the base B and the value of m enabling the calculation accuracy to be predetermined, the second neuron being arranged to update iteratively a partial quotient QP in conformity with $QP_i=QP_{i+1} + \Delta Q$ by summing said contributions $\Delta Q_i$ in order to produce the quotient Q upon completion of calculation.

2. A processor as claimed in Claim 1, characterized in that, the partial quotient QP initially being zero, said calculation means (11-15) are programmed to activate a group of said first neurons in order to:

a calculate a plurality of quantities
$SD_j = X - (QP_{i+1} + j.B^i).Y$, varying from 1 to B-1, i being an integer number initially equal to a predetermined maximum number,
b determine a value $j = q_i$ which verifies:

$$\text{sign } (SD_j) \neq \text{sign } (SD_{j+1})$$

where $SD_0 \geq 0$, $SD_B < 0$, and sign $(0) = +1$

c determine a contribution $\Delta Q_i = q_i.B^i$

and to activate said second neuron so as to determine a new partial quotient as:

$$QP_i = QP_{i+1} + \Delta Q_i$$

and to determine the quotient Q by iteration of the preceding operations while decrementing i until there is obtained a minimum value i which defines a predetermined accuracy for Q.

3. A processor as claimed in Claim 1, characterized in that the calculation means (11-15) are programmed to activate also a third neuron (NR) so as to calculate a partial remainder $RP_i = X - QP_i.Y$, the partial remainder, initially being equal to X, being updated by iteration as:

$$RP_i = RP_{i+1} - Y.\Delta Q._i$$

and that the calculation means are programmed to activate a group of said first neurons ($NA_1 - NA_{B-1}$):

a for calculating a plurality of quantities $SD_j = RP_{i+1} - j.B^i.Y$,
said plurality resulting from a number of B-1 operations for j varying from 1 to B-1, i being an integer number initially equal to a predetermined maximum number,
b for determining a value $j = q_i$ which verifies:

$$\text{sign } (SD_j) \neq \text{sign } (SD_{j+1})$$

where $SDO \geq 0$, $SD_B < 0$, and sign $(0) = + 1$

c for determining a contribution $\Delta Q_i = q_i.B^i$
and for activating said second neuron so as to determine a new partial quotient as:

$$QP_i = QP_{i+1} + \Delta Q_i$$

and for determining the quotient Q by iteration of the preceding operations while decrementing i until there is obtained a minimum value i which defines a predetermined accuracy for Q.

4. A processor as claimed in one of the Claims 2 or 3, modified in that the second neuron (NQ) receives the values g; from the group of first neurons and determines the quantities $\Delta Q_i = q_i.B^i$ at the same time as it performs the determination of new partial quotients and the quotient Q.

5. A neural processor (10) as claimed in Claim 1, characterized in that for B = 2 the neural processor operates either with two neurons, being a so-called first neuron and a so-called second neuron, for calculating the quotient Q, or with three neurons, being a so-called first neuron, a so-called second neuron for calculating the quotient Q, and a third neuron (NR) for calculating a remainder R.

6. A processor, characterized in that said calculation means (11-15) are programmed to perform a division in conformity with one of the Claims 1 to 5 at one instant, and the neural tasks of resolving and/or learning at another instant.

FIG.1

$$Z = Z_1 \cdot C_1 + Z_2 \cdot C_2$$

A

$$Z = F(Z_1 \cdot C_1 + Z_2 \cdot C_2)$$

B

FIG.2

FIG.2

FIG.3

FIG.4

FIG.5

FIG.6

FIG.7

QP

X

Z$_2$

**NA**

SNA

**NQ**

**RQ**

0

Q

## FIG.8

80

82

2$^{ki}$m

84

2$^{k.i}$

## FIG.9